# FASCICULE DE BREVET EUROPEEN

(11) **EP 0 382 602 B1**
(45) Date de publication et mention de la délivrance du brevet: **21.04.1993**
(21) Numéro de dépôt: 90400275.5
(22) Date de dépôt: 02.02.1990
(51) Int. Cl.: B60J 10/02

(54) **Vitrage prêt à la pose et procédé de fabrication**
Einbaufertige Verglasung und dessen Herstellungsverfahren
Ready to fit glazing and its production process

(30) Priorité: 06.02.1989 FR 8901458
(43) Date de publication de la demande: 16.08.1990
(73) Titulaire: SAINT-GOBAIN VITRAGE INTERNATIONAL, 92400 Courbevoie (FR)
(72) Inventeur: Bravet, Jean-Louis, F-60150 Thourotte (FR); Moncheaux, Michel Jean, F-60200 Compiegne (FR)
(74) Mandataire: Muller, René

(56) Documents cités:
- EP-A- 0 276 602
- EP-A- 0 292 364

## Description

La présente invention concerne un vitrage prêt à la pose, pouvant être monté dans une baie de carrosserie automobile, ou démonté de ladite baie par chauffage d'un cordon adhésif thermoplastique.

Des vitrages prêts à la pose, par exemple des pare-brise ou des lunettes arrières de véhicules automobiles, pouvant être montés et démontés par chauffage d'un cordon adhésif thermoplastique, sont connus par exemple de la publication de brevet français FR-A-2508267. Ce document décrit un vitrage qui présente le long de son pourtour une bande électriquement conductrice sur laquelle est appliqué le cordon adhésif thermoplastique. Pour le montage du vitrage dans la baie de carrosserie, il suffit de connecter la bande conductrice à une source de courant convenable. Par effet Joule, la chaleur produite ramollit le cordon adhésif qui peut coller au cadre de la baie de carrosserie. Pour le démontage du vitrage de la baie, en cas de remplacement du vitrage par exemple, il suffit à nouveau de connecter la bande conductrice à une source de courant afin de chauffer et ramollir le cordon pour décoller le vitrage du cadre de la baie.

Le vitrage prêt à la pose décrit ci-dessus ne donne pas entière satisfaction car lorsqu'il est collé sur le cadre, il subsiste entre la périphérie du vitrage et la carrosserie du véhicule un interstice qui doit être comblé par une moulure ou un joint de finition.

On a alors proposé dans la publication de brevet européen EP-A-0128837 (correspondant à FR-A-2 547 345), un vitrage prêt à la pose qui n'exige après sa mise en place sur la cadre aucune opération de finition supplémentaire. Le vitrage décrit dans ce document comprend tout autour de sa périphérie, un joint de finition en matière plastique souple, recouvrant partiellement la face intérieure du vitrage, le cordon adhésif étant disposé contre ce joint, et un élément métallique électriquement résistant, noyé en partie dans le joint de finition et en partie dans le cordon adhésif fait d'une matière thermoplastique pouvant être chauffé par effet Joule jusqu'à sa température de ramollissement.

Si la mise en place du vitrage n'exige aucune opération complémentaire de finition, en revanche, la mise en place du joint de finition autour du vitrage nécessite toujours des opérations manuelles délicates lors de la fabrication du vitrage. En outre, il peut s'avérer nécessaire, selon le profil du joint de finition, d'utiliser une couche de colle supplémentaire pour faire adhérer ce joint à la surface du vitrage.

Pour réduire le temps de chauffe lors de la pose de ce type de vitrage dans la baie de carrosserie, on a proposé d'après l'EP-A-0 292 364, d'utiliser en outre un profil en matière plastique auquel est fixé un élément résistant et chauffant en métal élastique de section en U. On obtient ainsi un chauffage direct entre le cordon thermofusible, l'aile de l'élément chauffant et la paroi du cadre. Ce dispositif ne résout pas le problème du montage du profil de finition sur le vitrage.

L'invention propose un vitrage qui obvie aux inconvénients cités. Elle propose un vitrage prêt à la pose, qui non seulement peut être monté et démonté d'une manière automatique, sans intervention manuelle, mais qui, en outre, peut être fabriqué aisément sans l'opération délicate du montage du joint de finition sur la périphérie du vitrage.

Le vitrage monolithique ou feuilleté, conformément à l'invention, définie dans la revendication 1 et dont le type, auquel se réfère le préambule de la revendication 1, est divulgué par la Figure 4 de EP-A-0292364, comprend sur sa périphérie, une bande électriquement conductrice apte à chauffer un cordon adhésif thermoplastique, et un joint de finition distinct du cordon adhésif qui est en contact intime avec la périphérie du vitrage et qui est obtenu par encapsulation du vitrage dans un moule.

L'encapsulation du vitrage ou surmoulage du joint de finition, non seulement élimine l'intervention manuelle de montage du joint, mais procure en outre une adhésion naturelle dudit joint au vitrage et il n'est plus nécessaire d'utiliser une couche adhésive supplémentaire.

La bande électriquement conductrice peut être une résistance métallique noyée partiellement ou totalement dans le cordon adhésif. Dans ce cas, de préférence, elle peut être déposée par un procédé connu de co-extrusion sur le pourtour du vitrage. Le profil de la bande conductrice peut présenter des formes variées.

Dans une variante, la bande conductrice est une bande qui longe le pourtour du vitrage et qui est déposée directement sur la surface de verre. Dans ce cas, cette bande peut être obtenue par le procédé connu utilisant le dépôt d'une pâte conductrice par sérigraphie, suivi d'une cuisson, cuisson qui se confond généralement avec le traitement thermique nécessaire pour le bombage et/ou la trempe du vitrage. La bande conductrice à la surface du verre peut être obtenue aussi par d'autres procédés de métallisation connus, par exemple par le procédé de projection de métaux fondus ou le procédé de métallisation sous vide. La bande conductrice peut encore être collée sur le verre, à l'aide d'un adhésif adéquat.

Le cordon adhésif peut être déposé par extrusion, éventuellement par coextrusion en même temps que la bande conductrice, après la fabrication par surmoulage du joint de finition. On peut alors se servir avantageusement de la surépaisseur du joint de finition pour déposer le cordon adhésif.

Dans une variante, au contraire, le cordon adhésif peut être déposé sur le vitrage avant le surmoulage du joint de finition. On peut alors dans cette variante, avantageusement, utiliser le cordon adhésif en tant que joint souple de surmoulage comme décrit plus en détail par la suite.

La matière constituant le joint de finition, obtenu par surmoulage, peut être une matière thermoplastique, par exemple du polyamide, du chlorure de polyvinyle, un polyuréthane thermoplastique, de l'ABS, ou une matière thermodurcissable, par exemple un polyuréthane thermoplastique, un élastomère tel que l'EPDM, etc...

Le joint de finition peut être obtenu par un surmoulage qui utilise une injection sous pression de la matière plastique fondue (injection thermoplastique). Le surmoulage peut aussi utiliser l'injection réactive, c'est-à-dire l'injection d'un mélange de composants réactionnels qui réagissent dans le moule pour forcer la matière plastique.

L'invention concerne aussi un procédé pour la fabrication d'un vitrage prêt à la pose, dans lequel on fabrique le joint de finition par encapsulation du vitrage.

Selon un des aspects du procédé, on utilise le cordon adhésif en tant que joint souple de surmoulage.

Comme décrit dans la publication de brevet européen EP-A 0127546, le surmoulage des vitrages nécessite l'utilisation d'un joint souple qui sert à déterminer la limite du surmoulage de la matière plastique sur le vitrage. Ce joint souple doit présenter une élasticité dans une direction sensiblement perpendiculaire à la surface du vitrage, tout en présentant une rigidité suffisante pour supporter la pression d'injection. Selon l'invention, on utilise en tant que joint souple le cordon adhésif préalablement déposé sur le vitrage. Un choix judicieux mais à la portée de l'homme de métier pour la matière constituant le cordon, permet à celui-ci de remplir cette fonction supplémentaire de joint souple. Pour améliorer la tenue mécanique du cordon adhésif dans sa fonction de joint souple, on utilise avantageusement la variante déjà décrite du cordon contenant la résistance chauffante.

D'autres caractéristiques et avantages de l'invention apparaîtront dans la description suivante d'exemples de réalisations de vitrages prêts à la pose et leur procédé de fabrication.

La figure 1 représente en coupe transversale le bord d'un vitrage prêt à la pose selon l'invention.

La figure 2 représente en coupe transversale le bord d'une variante du vitrage.

La figure 3 représente le bord d'une autre variante.

La figure 4 représente une coupe transversale partielle d'un moule utilisé pour fabriquer le vitrage de la figure 3.

La figure 5 représente une coupe transversale partielle d'un moule utilisé pour fabriquer un vitrage comme celui représenté sur la figure 2.

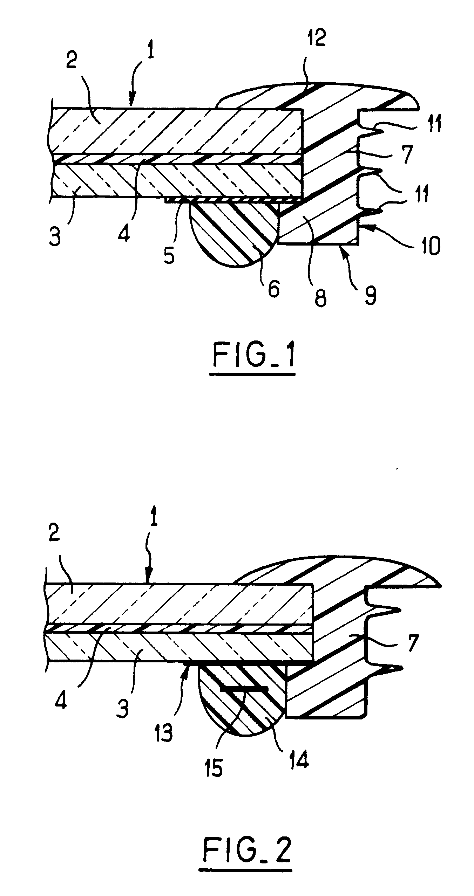

Le vitrage représenté sur la figure 1 est un vitrage feuilleté 1, formé de deux feuilles de verre 2, 3 et d'une couche intercalaire 4. La face de la feuille de verre intérieure 3 destinée à être orientée vers l'intérieur de l'habitacle, porte sur sa périphérie une bande 5 formée d'une couche métallique conductrice de l'électricité.

Cette bande 5 est obtenue par sérigraphie par un dépôt d'une pâte conductrice, cuite au cours du traitement thermique nécessaire au bombage du vitrage. Sur la bande conductrice, le vitrage présente un cordon adhésif 6, déposé par extrusion directement sur le vitrage. Un profil 7 obtenu par encapsulation (ou surmoulage) du vitrage entoure tout le bord ou périphérie du vitrage (extrémités des faces et chants du vitrage) et fait office de joint de finition. Ce joint de finition est en contact avec toute la périphérie du vitrage, auquel il adhère naturellement, de par son procédé de fabrication. Pour fabriquer ce vitrage prêt à la pose, on effectue d'abord le surmoulage du vitrage feuilleté fabriqué au préalable, par exemple par mise en oeuvre du procédé décrit dans la publication de brevet européen EP-A-0 127 546. A la sortie du moule d'encapsulation, on dépose le cordon adhésif 6 par extrusion, par exemple à l'aide d'un robot industriel.

L'épaisseur du cordon adhésif 6 doit être supérieure à l'épaisseur de la partie 8 du joint d'encapsulation 7 recouvrant la face interne du vitrage. La base 9 du joint d'encapsulation peut être utilisée comme cale d'épaisseur, au moment de l'écrasement du joint adhésif, lors du montage du vitrage dans la baie de carrosserie. Cette base est alors de préférence droite, c'est-à-dire sensiblement parallèle au bord de la face interne du vitrage. Le côté 10 destiné à être orienté vers la carrosserie porte plusieurs lèvres élastiques d'étanchéité 11 qui lorsque le vitrage est en position monté dans la baie de carrosserie (non représenté) s'appliquent contre elle. La partie extérieure 12 du joint de finition est mince et profilée.

Le vitrage prêt à la pose, représenté sur la figure 2, est un vitrage feuilleté formé de deux feuilles de verre 2 et 3 et d'une couche intercalaire 4. La feuille de la feuille de verre intérieure 3 destinée à être orientée vers l'habitacle présente une bordure 13, à base d'un émail, généralement un émail noir, qui remplit une fonction esthétique en cachant à la vue le cordon de colle et éventuellement une fonction de protection du collage entre les rayonnements U.V.

Comme le vitrage précédent, il est muni d'un profil surmoulé 7 semblable au vitrage précédent et d'un cordon adhésif 14. La résistance électrique nécessaire au chauffage du cordon adhésif lors du montage du vitrage est ici une bande métallique 15 noyée dans le cordon adhésif 14.

Pour fabriquer ce vitrage, on forme d'abord le profil d'encapsulation 7 par surmoulage du vitrage feuilleté, puis sur le vitrage surmoulé, on dépose directement par coextrusion le joint adhésif 14 et sa bande métallique interne 15 servant de résistance électrique. Dans une variante, on peut former le cordon adhésif 14 et sa bande métallique interne 15 par coextrusion, indépendemment du vitrage et on dépose ensuite le cordon préformé sur le vitrage surmoulé.

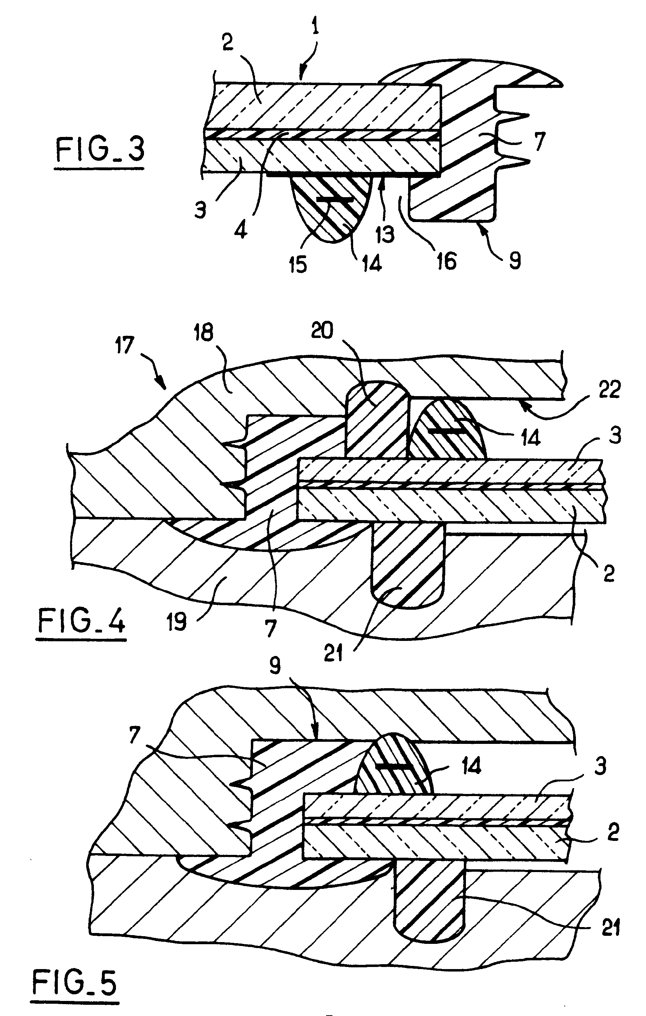

Le vitrage prêt à la pose, représenté sur la figure 3, est un vitrage feuilleté formé de deux feuilles de verre 2, 3 et d'une couche intercalaire 4. La face de la feuille de verre intérieure, destinée à être orientée vers l'habitacle présente une bordure 13 à base d'un émail comme dans le vitrage décrit précédemment. Le cordon adhésif 14 contient une bande métallique 15 formant la résistance électrique nécessaire au chauffage du cordon lors du montage. Le cordon adhésif 14 est séparé du joint de finition 7 obtenu par surmoulage par un espace 16 correspondant à la largeur du joint d'étanchéité utilisé lors du surmoulage délimitant la surface de la bordure du vitrage à surmouler. Ce vitrage prêt à la pose peut être fabriqué en déposant d'abord le cordon adhésif 14 et la résistance chauffante 15 par coextrusion et ensuite en fabriquant le joint de finition 7 par surmoulage par utilisation d'un moule comme représenté sur la figure 4. Le dépôt préalable du cordon adhésif 14 permet d'utiliser le chauffage nécessaire à l'opération de surmoulage pour améliorer l'adhésion du cordon avec le verre (ou l'émail).

Sur la figure 4, on a représenté en section, le moule 17 utilisé pour la fabrication d'un vitrage décrit en relation avec la figure 3. Le vitrage déjà muni du cordon adhésif 14 et de la résistance chauffante 15 est placé entre les deux parties 18, 19 du moule. Le joint d'étanchéité 20 appartenant à la partie supérieure 18 du moule est disposé juste à proximité du cordon adhésif 14. La largeur de ce joint d'étanchéité correspond à l'espace 16 cité précédemment. L'autre joint d'étanchéité 21 est incrusté dans la partie inférieure 19 du moule. L'espace périphérique entre les deux parties du moule, le vitrage et les joints d'étanchéité, est rempli par injection de la matière apte à former le joint de finition 7.

Sur la figure 5, on a représenté en section le moule utilisé pour la fabrication d'un vitrage comme décrit en relation avec la figure 2, mais en formant d'abord le cordon adhésif 14 par coextrusion avec la bande métallique conductrice 15 et en se servant ensuite de ce cordon comme joint d'étanchéité pour l'opération de surmoulage du vitrage pour former le joint de finition. Les autres éléments du moule sont semblables à ceux décrits précédemment, à part la face inférieure 22 de la partie supérieure du moule qui est adaptée au nouveau joint d'étanchéité utilisé dans cette variante, à savoir le cordon de collage qui, dans toutes les configurations déborde de la base 9 du joint encapsulé 7.

La bande métallique incorporée dans le cordon adhésif renforce mécaniquement celui-ci et aide à son maintien au cours de l'injection.

On peut encore améliorer le maintien du cordon adhésif par un joint souple supplémentaire (non représenté) du type des joints connus dans les procédés de surmoulage, prévu dans la partie supérieure du moule et qui en position de moulage se trouve accolé au cordon adhésif, du côté opposé au bord du vitrage.

## Revendications

1. Vitrage prêt à la pose, monolithique ou feuilleté, notamment pour véhicule automobile, comprenant sur sa périphérie un cordon adhésif (6, 14) thermoplastique destiné à être chauffé par effet Joule, une bande électriquement conductrice (5, 15) apte à chauffer le cordon adhésif et un joint de finition qui est en contact intime avec la périphérie du vitrage, et distinct du cordon adhésif (6, 14), caractérisé en ce que le joint de finition (7) est un profil surmoulé obtenu par encapsulation du vitrage dans un moule.

2. Vitrage selon la revendication 1, caractérisé en ce que la bande électriquement conductrice (15) est noyée totalement dans le cordon adhésif.

3. Vitrage selon la revendication 1, caractérisé en ce que la bande électriquement conductrice (5) est une bande déposée directement sur le verre.

4. Procédé pour la fabrication d'un vitrage prêt à la pose selon la revendication 1, caractérisé en ce qu'on forme d'abord le joint de finition (7) par encapsulation du vitrage et on dépose ensuite le cordon adhésif (6,14) par extrusion directement sur le vitrage.

5. Procédé selon la revendication 4, caractérisé en ce que le cordon adhésif (14) contient la bande conductrice (15), les deux éléments étant déposés simultanément sur le vitrage par coextrusion.

6. Procédé pour la fabrication d'un vitrage prêt à la pose selon une des revendications 1 à 3, caractérisé en ce que :
- on dépose d'abord le cordon adhésif (6,14) sur le vitrage,
- on place le vitrage muni du cordon dans un moule d'encapsulation,
- on réalise le surmoulage du joint de finition (7).

7. Procédé selon la revendication 6, caractérisé en ce qu'on utilise le cordon adhésif (6,14) dans l'opération de surmoulage en tant que joint d'étanchéité.

8. Procédé selon une des revendications 4 à 7, caractérisé en ce que l'ensemble des opérations nécessaires au dépôt du cordon adhésif (6,14) et au surmoulage du joint de finition (7) est automatisé.

## Patentansprüche

1. Einbaufertiges Einscheiben- oder Verbundglasfenster, insbesondere für Automobile, mit einer auf seinem Umfang befindlichen thermoplastischen Klebeschnur (6, 14), die durch Widerstandserhitzung erwärmbar ist, einem elektrischen Leiterband (5,15), das geeignet ist, die Klebeschnur zu erwärmen, und einer Abschlußdichtung, die sich in engem Kontakt mit dem Umfang der Fensterscheibe befindet und von der Klebeschnur (6, 14) verschieden ist, **dadurch gekennzeichnet**, daß die Abschlußdichtung (7) ein aufgeformtes Profil ist, das durch Ummantelung der Fensterscheibe in einer Form hergestellt ist.

2. Fenster nach Anspruch 1, **dadurch gekennzeichnet**, daß das elektrische Leiterband (15) vollständig in die Klebeschnur eingebettet ist.

3. Fenster nach Anspruch 1, **dadurch gekennzeichnet**, daß das elektrische Leiterband (5) ein direkt auf dem Glas aufgebrachtes Band ist.

4. Verfahren zur Herstellung eines einbaufertigen Fensters nach Anspruch 1, **dadurch gekennzeichnet**, daß zuerst die Abschlußdichtung (7) durch Ummantelung der Fensterscheibe hergestellt und anschließend die Klebeschnur (6, 14) durch Extrusion direkt auf der Fensterscheibe aufgebracht wird.

5. Verfahren nach Anspruch 4, **dadurch gekennzeichnet**, daß die Klebeschnur (14) das Leiterband (15) enthält und die zwei Elemente gleichzeitig durch Koextrusion auf die Fensterscheibe aufgebracht werden.

6. Verfahren zur Herstellung eines einbaufertigen Fensters nach einem der Ansprüche 1 bis 3, **dadurch gekennzeichnet**, daß
- zuerst die Klebeschnur (6, 14) auf der Glasscheibe aufgebracht,
- die mit der Schnur versehene Fensterscheibe in eine Ummantelungsform positioniert und
- anschließend die Aufformung der Abschlußdichtung (7) durchgeführt wird.

7. Verfahren nach Anspruch 6, **dadurch gekennzeichnet**, daß die Klebeschnur (6, 14) als Dichtung im Aufformungsarbeitsgang verwendet wird.

8. Verfahren nach einem der Ansprüche 4 bis 7, **dadurch gekennzeichnet**, daß sämtliche zum Aufbringen der Klebeschnur (6, 14) und zum Aufformen der Abschlußdichtung (7) notwendigen Arbeitsgänge automatisiert sind.

## Claims

1. Ready to fit, monolithic or laminated, glazing pane, notably for an automobile vehicle, comprising on its periphery a thermoplastic adhesive cord (6, 14) intended to be heated by Joule effect,an electrically conducting strip (5, 15) adapted for heating the adhesive cord and a finishing seal which is in intimate contact with the periphery of the pane and distinct from the adhesive cord (6, 14), characterized in that the finishing seal (7) is a moulded-on profile produced by encapsulation of the pane in a mould.

2. Pane according to Claim 1, characterized in that the electrically conducting strip (15) is entirely embedded in the adhesive cord.

3. Pane according to Claim 1, characterized in that the electrically conducting strip (5) is a strip deposited directly on the glass.

4. Method of making a ready to fit pane according to Claim 1, characterized in that the finishing seal (7) is first formed by encapsulation of the pane and then the adhesive cord (6, 14) is deposited by extrusion directly onto the pane.

5. Method according to Claim 4, characterized in that the adhesive cord (14) contains the conducting strip (15), both elements being deposited simultaneously onto the pane by coextrusion.

6. Method of making a ready to fit pane according to one of Claims 1 to 3, characterized in that:
- the adhesive cord (6, 14) is first deposited on the pane,
- the pane, equipped with the cord, is placed in an encapsulating mould,
- the moulding-on of the finishing seal (7) is carried out.

7. Method according to Claim 6, characterized in that the adhesive cord (6, 14) is used in the moulding-on operation as a seal.

8. Method according to one of Claims 4 to 7, characterized in that the whole of the operations necessary for the deposition of the adhesive cord (6, 14) and for the moulding-on of the finishing seal (7) is automated.
